(19) Europäisches Patentamt
European Patent Office
Office européen des brevets

(11) **EP 1 696 222 B1**

(12) **EUROPÄISCHE PATENTSCHRIFT**

(45) Veröffentlichungstag und Bekanntmachung des Hinweises auf die Patenterteilung:
**31.12.2008   Patentblatt 2009/01**

(51) Int Cl.:
***G01N 13/00*** *(2006.01)*

(21) Anmeldenummer: 05100750.8

(22) Anmeldetag: **03.02.2005**

(54) **Verfahren zur Bestimmung der Grenzflächenspannung zwischen zwei nicht mischbaren Flüssigkeiten**

Method for determining the interface tension between two immiscible liquids

Méthode pour déterminer la tension interfaciale entre deux liquides non miscibles

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**30.08.2006   Patentblatt 2006/35**

(73) Patentinhaber: **Max-Planck-Gesellschaft zur Förderung
der Wissenschaften e.V.
80539 München (DE)**

(72) Erfinder:
• **Graf, Karlheinz, Dr.
57258 Freudenberg (DE)**
• **Höhn, Norbert
Max-Planck-Gesellschaft für
64285 Darmstadt (DE)**
• **Li, Guangfen
Max-Planck-Gesellschaft für
55131, Mainz (DE)**
• **Butt, Hans-Jürgen, Dr.
Max-Planck-Gesellschaft für
57223, Kreuztal (DE)**

(74) Vertreter: **Hannke, Christian et al
Hannke Bittner & Partner
Patent- und Rechtsanwalte
Ägidienplatz 7
93047 Regensburg (DE)**

(56) Entgegenhaltungen:
**FR-A- 2 343 242          US-A- 4 523 456
US-A- 5 615 276**

• **RASHIDNIA N. ET AL: 'Interfacial Tension Measurement of Immiscible Liquids Using a Capillary Tube' NASA CONTRACTOR REPORT 189133 M{rz 1992, Seiten 1 - 8**

**Beschreibung**

Die vorliegende Erfindung bezieht sich auf ein Verfahren zur Bestimmung der Grenzflächenspannung zwischen zwei nicht mischbaren Flüssigkeiten beziehungsweise zur Bestimmung der mit diesen Grenzflächenspannung korrelierenden Grenzflächenenergien. Im Rahmen der vorliegenden Beschreibung wird der einheitlich der Begriff Grenzflächenspannung verwendet, der sowohl die Grenzflächenspannung selbst als auch die sog. Oberflächenspannung beinhaltet.

Die Grenzflächenspannung wird durch die Kräfte im Inneren einer Flüssigkeit an ihrer Grenzfläche hervorgerufen. Innerhalb der Flüssigkeit wirken die so genannten Kohäsionskräfte in alle Richtungen gleichermaßen, da jedes Molekül der Flüssigkeit in jede Richtung gleichermaßen von anderen Molekülen umgeben ist. An der Grenzfläche dagegen wirkt eine resultierende Kohäsionskraft nach innen, die einem Druck im Inneren der Flüssigkeit entgegenwirken muss. Aufgrund der hohen Bedeutung der Grenzflächenspannung in einer Vielzahl von technischen Prozessen wie beispielsweise bei Wasch- und Reinigungsvorgängen oder auch bei der Anwendung von Schmierstoffen ist die Kenntnis der Grenzflächenspannung zwischen unterschiedlichen Flüssigkeiten und insbesondere zwischen solchen, die sich nicht mischen, von hoher Bedeutung.

Aus dem Stand der Technik sind diverse Verfahren zur Bestimmung der Grenzflächenspannung zwischen zwei nicht miteinander mischbaren Flüssigkeiten bekannt. Bei dem so genannten DuNouy Ringverfahren wird die Wechselwirkung zwischen einem Metallring und der nannten DuNouy Ringverfahren wird die Wechselwirkung zwischen einem Metallring und der zu untersuchenden Grenzfläche untersucht. Der Ring wird unter die Grenzfläche der sich nicht mischenden Flüssigkeiten gesenkt und anschließend nach oben gezogen. Gleichzeitig mit der Aufwärtsbewegung des Rings entsteht eine auch als Meniskus bezeichnete Formation in der unten gelegenen Flüssigkeit. Schließlich reißt diese Formation vom Ring und die Flüssigkeit kehrt in ihre ursprüngliche Position zurück. Vor diesem Abreißen nimmt die auszuübende Kraft auf die Formation ein Maximum ein und verringert sich kurz bevor die Formation tatsächlich reißt. Die Berechnung der Grenzflächenspannung wird durch dieses Verfahren auf Grundlage einer Messung der Maximalkraft durchgeführt.

Bei dem so genannten Hängtropfen-Verfahren hängt ein Tröpfchen Flüssigkeit an einer Spritze. Die Form dieses Tröpfchens wird durch das Gleichgewicht der Kräfte bestimmt, welche die Grenzflächenspannung dieser Flüssigkeit beinhalten. Bei diesem Verfahren ist es erforderlich, die Gestalt bzw. Form des Tröpfchens sehr genau zu bestimmen.

Bei dem so genannten Drehtropfen-Verfahren wird ein Tröpfchen einer ersten Flüssigkeit in einer zweiten Flüssigkeit angeordnet und beide gedreht. Die Deformation des Tröpfchens erlaubt Rückschlüsse auf die Grenzflächenspannungen. Dieses Verfahren wird insbesondere bei kleinen Spannungen angewandt und setzt ebenfalls eine genaue Bestimmung der Deformation voraus.

Bei dem so genannten Tropfen-Volumen-Verfahren wird ein bekanntes Volumen Flüssigkeit L1 in eine Flüssigkeit L2 gepresst. Die Anzahl der auf diese Weise erzeugten Tröpfchen ist ein Maß für die Grenzflächenspannung.

Daneben sind theoretische Verfahren bekannt, um die Grenzflächenspannungen auf Grundlage der Grenzflächenspannung reiner Flüssigkeiten zu bestimmen.

Die genannten Verfahren weisen jeweils den Nachteil auf, dass es sich beim jeweiligen Verfahren nicht um statische Verfahren handelt und daher stets zeitabhängige Messungen durchgeführt werden müssen. Es ist nötig, die Grenzflächenspannung aus einem Bewegungsablauf zu eruieren, was für sich genommen Schwierigkeiten bereitet. Auch sind bei den genannten Verfahren relativ große Flüssigkeitsmengen nötig, um die Messungen durchzuführen.

Aus NASA Contractor Report 189133 von N. Raschidnia et al "Interfacial Tension Measurement of Immiscible Liquids Using a Capillary Tube" ist ein Verfahren zur Ermittlung der Grenzflächenspannung zwischen zwei nicht mischbaren Flussigkeiten bekannt.

Der vorliegenden Erfindung liegt damit die Aufgabe zu Grunde, ein Verfahren für die Ermittlung von Grenzflächenspannungen zur Verfügung zu stellen, welches die Bestimmung der Grenzflächenspannung aus statischen Zuständen unter Verwendung geringer Flüssigkeitsmengen erlaubt. Daneben liegt der vorliegenden Erfindung die Aufgabe zu Grunde, ein Verfahren zur Verfügung zu stellen, welches im Wesentlichen nicht von den verwendeten Messmaterialien abhängt.

Diese Aufgaben werden durch den Gegenstand des Hauptanspruchs 1 sowie die Gegenstände der Unteransprüche gelöst. Es wird jedoch darauf hingewiesen, dass nicht sämtliche Aufgaben gleichermaßen durch die Gegenstände aller Unteransprüche gelöst werden.

Bei dem erfindungsgemäßen Verfahren zur Ermittlung von Grenzflächenspannungen zwischen zwei nicht mischbaren Flüssigkeiten wird in einem ersten Verfahrensschritt ein erstes Medium in eine Aufnahmeeinrichtung eingeführt. In einem weiteren Verfahrensschritt wird die erste Flüssigkeit in die Aufnahmeeinrichtung eingeführt, wobei die erste Flüssigkeit an das erste Medium angrenzt.

In einem weiteren Verfahrensschritt wird die zweite Flüssigkeit in die Aufnahmeeinrichtung eingeführt, wobei die zweite Flüssigkeit an die erste Flüssigkeit angrenzt.

In einem weiteren Verfahrensschritt wird ein zweites Medium in die Aufnahmeeinrichtung eingeführt, wobei das zweite Medium an die zweite Flüssigkeit angrenzt.

In einem weiteren Verfahrensschritt werden die in die Aufnahmeeinrichtung eingeführten Medien sowie die Flüssigkeiten beobachtet und in einem weiteren Verfahrensschritt wird die Grenzflächenspannung aus den beobachteten Grenzflächen zwischen den Medien und Flüssigkeiten ermittelt.

Unter einer Aufnahmeeinrichtung wird eine Einrichtung verstanden, die zur Aufnahme von flüssigen und/oder gasförmigen Medien geeignet ist. Dabei wird unter einer Aufnahmeeinrichtung auch eine Einrichtung verstanden, durch die das Medium hindurchgeführt wird, wie ein Rohr oder dergleichen.

Unter einem Angrenzen eines Mediums an eine Flüssigkeit bzw. einer Flüssigkeit an eine weitere Flüssigkeit wird verstanden, dass die jeweiligen Flüssigkeits- bzw. Medienvolumina in wenigstens einem Bereich ihrer Oberfläche aneinander angrenzen und sich auf diese Weise eine Grenzfläche ergibt.

Bevorzugt handelt es sich bei dem ersten Medium und dem zweiten Medium um gasförmige Medien und besonders bevorzugt um Luft. Es können jedoch auch andere Gase wie beispielsweise Schutzgase zum Einsatz kommen, was insbesondere dann vorteilhaft ist, wenn zwischen Luft und den zu untersuchenden Flüssigkeiten ungewollte Wechselwirkungen entstehen könnten.

Bevorzugt wird ferner wenigstens ein Medium und/oder eine Flüssigkeit in die Aufnahmeeinrichtung eingesaugt und besonders bevorzugt werden alle Medien und alle Flüssigkeiten in die Aufnahmeeinrichtung eingesaugt. Bevorzugt weist die Aufnahmeeinrichtung einen Durchgangskanal mit einem vorgegebenen Querschnitt auf. Bevorzugt ist dieser Querschnitt konstant, er kann jedoch auch über die Länge des Kanals hinweg variieren. Dieser Querschnitt ist bevorzugt kreisförmig. Es können jedoch auch andere Querschnitte zur Anwendung kommen wie ellipsenförmige Querschnitte, polygonartige insbesondere quadratische oder rechteckige Querschnitte und dergleichen.

In diesen Durchgangskanal werden bevorzugt die einzelnen Medien und Flüssigkeiten eingesaugt, sodass sie innerhalb des Kanals übereinander bzw. nebeneinander angeordnet sind.

Bevorzugt weist der Kanal einen Durchmesser auf, der zwischen 10 $\mu$m und 1000 $\mu$m, bevorzugt zwischen 100 $\mu$m und 800 $\mu$m und besonders bevorzugt zwischen 200 $\mu$m und 600 $\mu$m liegt. Durch die Verwendung derartig kleiner Querschnittsflächen der Durchgangskanäle kann erreicht werden, dass die einzelnen Medien und Flüssigkeiten in besonders vorteilhafter Weise über- bzw. nebeneinander angeordnet sind. Auf diese Weise kann der Einfluss der Schwerkraft bei Flüssigkeiten mit unterschiedlichen Dichten minimiert werden. Daneben ist es auf diese Weise sehr gut möglich, die jeweiligen Grenzflächen optisch genau zu lokalisieren. Es ist jedoch auch möglich, noch kleinere als die genannten Durchmesser zu verwenden, bis hin in den nm - Bereich. In diesem Fall sind jedoch auch Modifikationen an den optischen Einrichtungen zur Beobachtung erforderlich.

Besonders bevorzugt werden alle Medien und Flüssigkeiten in die Aufnahmeeinrichtung mittels einer Pumpenoder Spritzeneinrichtung eingesaugt. Es ist jedoch alternativ auch möglich, die Aufnahmeeinrichtung in ein Behältnis einzutauchen, in dem die jeweiligen Flüssigkeiten vorhanden sind und im Anschluss daran die Aufnahmeeinrichtung aus dem Behältnis herauszuziehen. Über eine zusätzliche Öffnung wird erreicht, dass auch unterhalb der Flüssigkeiten ein Medium wie insbesondere aber nicht ausschließlich Luft vorhanden ist. Ferner ist es möglich, die Aufnahmeeinrichtung mit den Flüssigkeiten zu befüllen.

Bevorzugt ist die Aufnahmeeinrichtung wenigstens teilweise aus einem transparenten Material hergestellt und bevorzugt aus einem Material, welches aus einer Gruppe von Materialien ausgewählt ist, welche Glas, wie insbesondere Borsilikatglas oder Quarzglas, Kunststoffe und dergleichen enthält. Durch die Wahl eines transparenten Materials wird die Beobachtung der Flüssigkeit im Inneren der Aufnahmeeinrichtungen erleichtert.

Bevorzugt werden die in der Aufnahmeeinrichtung aufgenommenen Medien und Flüssigkeiten mittels einer Kameraeinrichtung beobachtet. Anstelle einer Kamera können jedoch auch allgemein solche Bildaufnahmeeinrichtungen verwendet werden, welche eine ortsaufgelöste Bestimmung der Grenzflächen ermöglichen. Ferner kann es sich auch um Infrarotkameras und dergleichen handeln, falls die zu untersuchenden Flüssigkeiten für Licht im sichtbaren Bereich nicht transparent sind, jedoch für Licht im Infraroten Bereich. Auch kann es sich um Kameraeinrichtungen handeln, die für Licht im ultravioletten Bereich empfindlich sind, falls die zu untersuchenden Flüssigkeiten lediglich Licht im ultravioletten Spektralbereich transmittieren. Auch die Verwendung von Röntgen - Strahlung ist möglich.

Anstelle oder neben der Verwendung einer Kamera können die Flüssigkeiten auch mit einer geeigneten Optik auf einem Schirm oder dergleichen abgebildet werden.

Bevorzugt werden die Grenzflächen zwischen den einzelnen Medien und Flüssigkeiten beobachtet. Dabei werden besonders bevorzugt die Kontaktwinkel an den Grenzflächen zwischen den einzelnen Medien bezüglich des Randes der Aufnahmeeinrichtung betrachtet und aus diesen Kontaktwinkeln die Grenzflächenspannungen berechnet. Anstelle der Kontaktwinkel kann jedoch auch die Struktur der Grenzfläche wie beispielsweise deren Krümmungsradius ermittelt werden und aus diesem Krümmungsradius auf die Grenzflächenspannungen geschlossen werden. Unter den Grenzflächen zwischen den Medien werden diejenigen Grenzflächen verstanden, an denen sich die Medien beziehungsweise die Flüssigkeiten berühren.

Da sich in der Aufnahmeeinrichtung durch das Ansaugen eine statische Säule entwickelt, können auf relativ einfache Weise die jeweiligen Kontaktwinkel der Flächen gemessen werden, genauer gesagt diejenigen Winkel, unter welchen die jeweiligen Kontaktflächen gegenüber der Längsrichtung der Aufnahmeeinrichtung angeordnet sind. Bevorzugt erfolgt die Ermittlung der Grenzflächenspannung unter Einbeziehung vorbekannter Werte, wobei es sich besonders bevorzugt bei den vorbekannten Werten auch um die Werte der Grenzflächenspannungen der beteiligten Flüssigkeiten handelt.

Im Einzelnen werden die jeweiligen Winkel, die die Kontaktflächen mit der Längsrichtung der Aufnahmeeinrichtung einnehmen, gemessen, die jeweiligen bekannten Werte für die Grenzflächenspannungen der Flüssigkeiten verwendet und daraus die Grenzflächenspannung zwischen den beiden Flüssigkeiten berechnet.

Es wird zu der Ermittlung der Kontaktwinkel eine speziell zu diesem Zweck angepasste Software verwendet, die aus den von der Beobachtungseinrichtung gelieferten Bildern die einzelnen Winkel ermittelt und gegebenenfalls Mittelwerte dieser Winkel ausgibt. Bevorzugt ist die Software auch dazu vorgesehen, um aus den ermittelten Kontaktwinkeln die Grenzflächenspannung zu ermitteln. Unter Verwendung einer derartigen Software ist es möglich, das vollständige Messverfahren im wesentlichen vollautomatisch durchzuführen, so dass nach dem Einführen der Flüssigkeiten in die Aufnahmeeinrichtung unmittelbar die gesuchten Werte für die Grenzflächenspannung ausgegeben werden.

Die Erfindung ist ferner auf eine Vorrichtung gemäß Anspruch 12 zur Untersuchung der Grenzflächenspannung zwischen zwei nicht mischbaren Flüssigkeiten gerichtet, welche eine wenigstens teilweise transparente Aufnahmeeinrichtung aufweist, wobei die Aufnahmeeinrichtung einen Kanal zur Aufnahme der zu untersuchenden Flüssigkeiten sowie wenigstens eines weiteren Mediums aufweist. Die Vorrichtung weist weiterhin eine Beobachtungseinrichtung zur Beobachtung der zwischen den Flüssigkeiten und Medien entstehenden Grenzflächen auf.

Weitere Vorteile und Ausführungsformen ergeben sich aus den beigefügten Zeichnungen.

Darin zeigen:

Fig. 1     eine schematische Darstellung zur Ermittlung der Grenzflächenspannung;

Fig. 2     eine schematische Darstellung einer erfindungsgemäßen Vorrichtung;

Fig. 3a     ein beobachtetes Bild für eine Zusammensetzung aus Toluen und Wasser;

Fig. 3b     ein beobachtetes Bild für eine Zusammensetzung aus Hexan und Wasser;

Fig. 3c     ein beobachtetes Bild für eine Zusammensetzung aus Chloroform und Wasser;

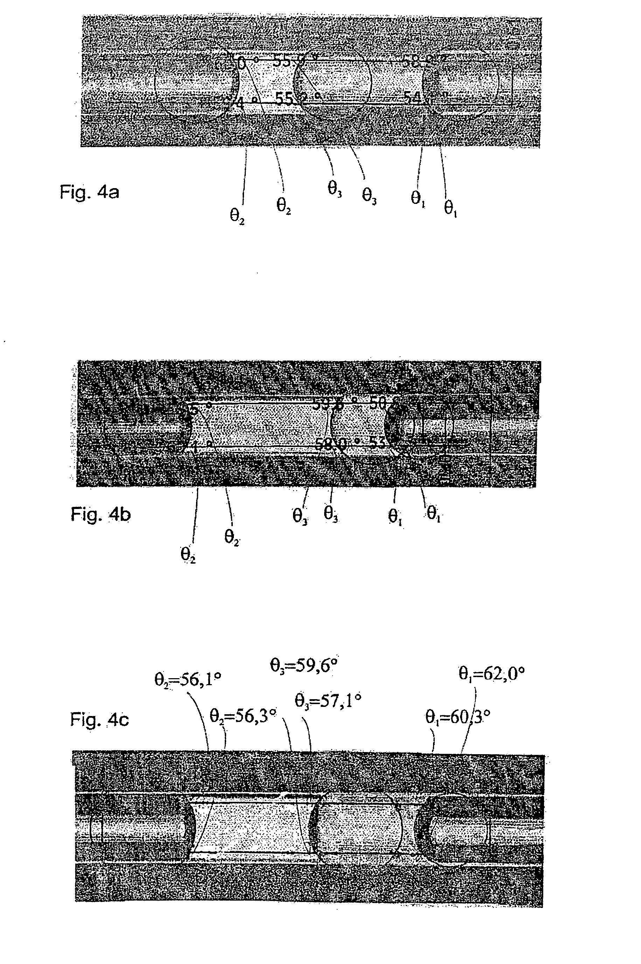

Fig. 4a     ein beobachtetes Bild für eine Zusammensetzung aus Toluen und Wasser unter Verwendung einer modifizierten Aufnahmeeinrichtung;

Fig. 4b     ein beobachtetes Bild für eine Zusammensetzung aus Hexan und Wasser unter Verwendung einer modifizierten Aufnahmeeinrichtung; und

Fig. 4c     ein beobachtetes Bild für eine Zusammensetzung aus Chloroform und Wasser unter Verwendung einer modifizierten Aufnahmeeinrichtung.

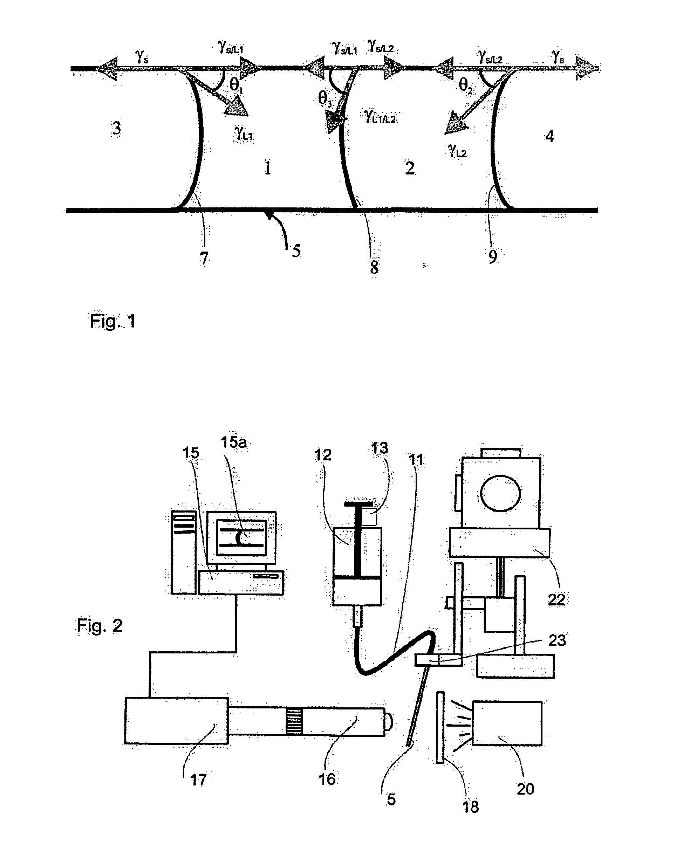

In Fig. 1 bezieht sich das Bezugszeichen 5 auf die Aufnahmeeinrichtung, in der zwei Medien 3 und 4 sowie die beiden nicht mischbaren Flüssigkeiten 1 und 2 angeordnet sind bzw. eingesaugt wurden. In dieser Ausführungsform handelt es sich bei den beiden Medien 3 und 4 jeweils um Luft, wobei, wie oben ausgeführt, auch ein anderes Gas verwendet werden könnte. Im Einzelnen wird in die Aufnahmeeinrichtung mit Hilfe einer Spritze zunächst Luft angesaugt, anschließend die erste Flüssigkeit 1, danach die zweite Flüssigkeit 2 und abschließend noch einmal Luft.

Die Bezugszeichen 7, 8 und 9 beziehen sich auf die Kontaktflächen bzw. Grenzflächen. Im Einzelnen bezieht sich Bezugszeichen 7 auf die Grenzfläche zwischen der Luft 3 und der ersten Flüssigkeit 1. Das Bezugszeichen 8 bezieht sich auf die Grenzfläche zwischen der ersten Flüssigkeit 1 und der zweiten Flüssigkeit 2 und das Bezugszeichen 9 auf die Grenzfläche zwischen der zweiten Flüssigkeit 2 und der Luft 4. Die einzelnen Grenzflächen können mittels einer Kameraeinrichtung bzw. eines Zoomobjektivs gemeinsam oder hintereinander betrachtet werden. Die Hintereinanderbetrachtung ist deshalb möglich, da der in Fig. 1 gezeigte Zustand stationär ist. Aus der Betrachtung der einzelnen Kontaktflächen können die in Fig. 1 gezeigten Winkel $\theta_1$, $\theta_2$ und $\theta_3$ zwischen den jeweiligen Flüssigkeiten und dem Rand des Kanals der Aufnahmeeinrichtung 5 ermittelt werden. Aus diesen Winkeln kann die Grenzflächenspannung zwischen den beiden Flüssigkeiten ermittelt werden, weil von einem Gleichgewichtszustand ausgegangen werden kann. Im Falle eines Gleichgewichts können die so genannten Young-Gleichungen für jede Grenzflächen wie folgt aufgestellt werden.

$$\gamma_S = \gamma_{S/L1} + \gamma_{L1} \cos\theta_1 \qquad\qquad (1)$$

$$\gamma_S = \gamma_{S/L2} + \gamma_{L2} \cos\theta_2 \qquad\qquad (2)$$

$$\gamma_{S/L2} = \gamma_{S/L1} + \gamma_{L1/L2} \cos\theta_3 \qquad\qquad (3)$$

Die so genannte Young-Gleichung oder die modifizierte Young-Gleichung ergibt sich, wenn die jeweils angreifenden Kräfte aus drei Grenzflächenspannungen an der Grenzfläche im Gleichgewicht sind.

In obigen Gleichungen bezeichnet $\gamma$ die jeweiligen Grenzflächenspannungen für die entsprechenden Grenzflächen, die durch die Indizes dargestellt sind. $\gamma_{S/L1}$ bezeichnet die Grenzflächenspannung zwischen dem Festkörper, d.h. dem Kanal, und der Flüssigkeit L1, $\gamma_{L1}$ die Grenzflächenspannung zwischen der Luft und der Flüssigkeit L1. $\gamma_{L2}$ bezeichnet die Grenzflächenspannung zwischen der Luft und der Flüssigkeit L2. $\gamma_{S/L2}$ bezeichnet die Grenzflächenspannung zwischen der Flüssigkeit L2 und dem Festkörper. Die Größe $\gamma_{L1/L2}$ bezeichnet den zu ermittelnden Wert der Grenzflächenspannung zwischen den beiden Flüssigkeiten L1 und L2. $\gamma_S$ bezeichnet die Grenzflächenspannung zwischen der Luft und dem Festkörper.

Bei den Winkeln $\theta_1$, $\theta_2$ und $\theta_3$ handelt es sich um die jeweiligen Kontakt- bzw. Berührungswinkel.

Aus den unter (1-3) genannten Gleichungen lässt sich folgende Beziehung für den zu ermittelnden Wert ($\gamma_{L1/L2}$) ableiten:

$$\gamma_{L1/L2} = \frac{\gamma_{S/L2} - \gamma_{S/L1}}{\cos\theta_3} = \frac{\gamma_{L1}\cos\theta_1 - \gamma_{L2}\cos\theta_2}{\cos\theta_3} \qquad\qquad (4)$$

Wie aus dieser Beziehung ersichtlich, hängt die Grenzflächenspannung nur von den jeweiligen Oberflächenspannungen der Flüssigkeiten gegenüber dem Festkörper und der Luft, sowie den Winkeln $\theta_1$, $\theta_2$ und $\theta_3$ ab. Die einzelnen Winkel $\theta_1$, $\theta_2$ und $\theta_3$ können mit dem erfindungsgemäßen Verfahren optisch bzw. mit Hilfe einer Kamera bestimmt werden. Die Grenzflächenspannungen der Flüssigkeiten gegenüber der Luft können Tabellen entnommen werden oder jeweils mit aus dem Stand der Technik bekannten Verfahren ermittelt werden.

Wie sich aus Gleichung 4 ergibt, ist bei dem erfindungsgemäßen Verfahren die zu ermittelnde Grenzflächenspannung unabhängig von den Spannungen, die sich durch die Berührung mit dem Festkörper, d.h. dem Rand des Durchgangskanals ergeben. Dies bedeutet, dass das erfindungsgemäße Verfahren unabhängig von dem Material der Aufnahmeeinrichtung bzw. des Kanals angewendet werden kann.

Daher kann generell für den Durchgangskanal jedes beliebige Material verwendet werden sofern es gewährleistet, dass die Flüssigkeiten einen von 0 unterschiedlichen Berührungswinkel bilden und das Material transparent ist. Diese Voraussetzungen sind beispielsweise für das bevorzugt verwendete Borsilikat-Glas erfüllt.

Das erfindungsgemäße Verfahren wurde mit den Flüssigkeiten Wasser/Toluen, Wasser/Hexan und Wasser/Chloroform durchgeführt, wobei Mikrokanäle aus Borsilikat verwendet wurden und diese Kanäle einen Durchmesser von zwischen einigen $\mu$m bis hin zu 1 mm aufwiesen. Als Ergebnis wurden für die Grenzflächenspannungen Werte von 36,1 mN/m, 49,0 mN/m und 33,5 mN/m bei 21,0°C ermittelt. Diese erlangten Werte liegen in einem Bereich von maximal 2% bezüglich der in der Literatur angegeben Werte.

Damit kann mit dem erfindungsgemäßen Verfahren in sehr einfacher Weise mit hoher Präzision die Grenzflächenspannung zwischen zwei nicht mischbaren Flüssigkeiten ermittelt werden.

Fig. 2 zeigt eine Vorrichtung zum Messen der Grenzflächenspannungen.

Die Aufnahmeeinrichtung 5 steht über eine Verbindungsleitung 11 mit einer Spritze 12 in Verbindung. Diese Spritze 12 kann über eine Motoreinrichtung 13 betätigt werden und auf diese Weise Flüssigkeit in die Aufnahmeeinrichtung 5 eingesaugt werden. Dabei kann das eingesaugte Volumen mit hoher Genauigkeit geregelt werden. Die Flussgeschwindigkeit innerhalb der Aufnahmeeinrichtung wurde durch ein Programm gesteuert, wobei bei diesem Ausführungsbeispiel die Flussgeschwindigkeit zwischen 10 $\mu$m/sec und 900 $\mu$m/sec eingestellt werden kann. Die Verbindungseinrichtung 11 weist einen inneren Durchmesser von 1 mm auf. Diese Aufnahmeeinrichtung weist eine Kapillare aus Borsilikat, mit einem inneren Durchmesser von ca. 500 $\mu$m auf. Die Aufnahmeeinrichtung 5 wird von einer Halteeinrichtung 23 gehalten, die an einer Verstelleinrichtung 22 angeordnet ist. Diese Verstelleinrichtung 22 erlaubt eine Verschiebung der Aufnahmeeinrichtung 5 in x-, y-, und z-Richtung. Das Bezugszeichen 17 bezieht sich auf eine Kameraeinrichtung zur Beobachtung der Aufnahmeeinrichtung 5. Dabei wird die Aufnahmeeinrichtung durch die Verstelleinrichtung 22 im Wesentlichen in den Fokus der Kameraeinrichtung geschoben.

Das Bezugszeichen 20 bezieht sich auf eine Lichtquelle, die dazu dient, um über eine Streueinrichtung 18 Licht auf die Aufnahmeeinrichtung 5 zu werfen und diese auf diese Weise zu beleuchten. Die von der Kamera 17 mit dem Objektiv 16 ausgegebenen Bilddaten werden über eine EDV-Anlage 15 ausgewertet und auf einem Monitor 15a dargestellt. Mit Hilfe der Eingangs erwähnten Software erfolgt neben oder anstelle der Darstellung auf dem Monitor eine automatische Auswertung der Bilddaten, insbesondere eine automatische Ermittlung der Kontaktwinkel sowie der Grenzflächenspannung.

Ferner kann durch Verwendung einer Software das gesamte Messverfahren automatisch durchgeführt werden, d.h. auch die Ansteuerung der Verstelleinrichtung, der Kamera sowie der Spritzeneinrichtung automatisch erfolgen.

Bevorzugt steht auch (in Fig. 2 nicht gezeigt) die Verstelleinrichtung 22 in Verbindung mit der Kamera, um eine automatische Einstellung der Aufnahmeeinrichtung in den Fokus des Objektivs zu gewährleisten. Um zu erreichen, dass die aufgenommenen Bilder nicht von dem Kanal selbst, beispielsweise durch Beugungseffekte, beeinflusst werden, kann beispielsweise ein Kanal mit rechteckigem Querschnitt und damit im Wesentlichen ebenen Seitenflächen verwendet werden. Auch kann eine Kompensation derartiger Effekte durch die Verwendung geeigneter Software oder mittels Referenzstrahlen erreicht werden.

Das erfindungsgemäße Verfahren wurde mit unterschiedlichen Aufnahmeeinrichtungen durchgeführt. Unabhängig von den verwendeten Materialien wurden im Wesentlichen übereinstimmende Werte für die Grenzflächenspannung ermittelt.

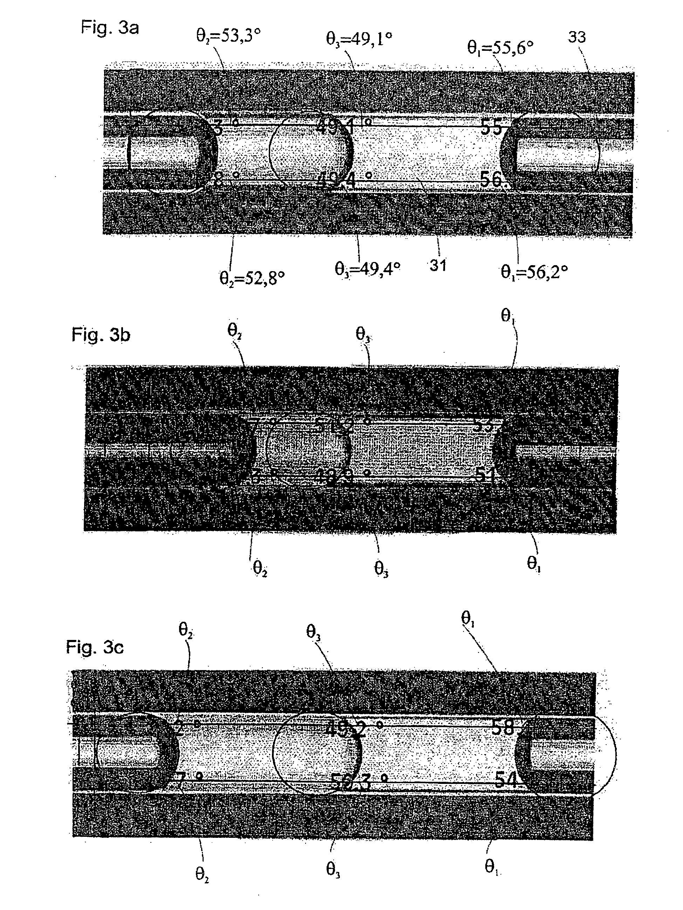

Fig. 3a zeigt das mittels der Kamera beobachtete Bild für eine Zusammensetzung aus Toluen und Wasser. Dabei wurde für $\theta_1$ ein Winkel von 55, 9°, für $\theta_2$ ein Winkel von 53, 0° und für $\theta_3$ ein Winkel von 49, 2° ermittelt. In Fig. 3a sowie auch in anderen Figuren sind jeweils zwei Winkel $\theta_1$ aufgetragen. Da diese sich leicht unterschieden, wurde der jeweilige Winkel $\theta_1$ als arithmetisches Mittel dieser jeweiligen Werte angenommen. Ebenfalls wurden für die Winkel $\theta_2$ und $\theta_3$ die arithmetischen Mittel der jeweils beiden gemessenen Werte $\theta_2$ und $\theta_3$ verwendet. Mit Hilfe der obigen Gleichung 4 wurde damit die Grenzflächenspannung des Toluen-Wasser-Systems zu 36, 2 mN/m ermittelt. Dabei wurden jeweils die Werte für die Grenzflächenspannungen von Wasser und Toluen bei 20°C zu Grunde gelegt, da die Messungen ebenfalls bei dieser Temperatur durchgeführt wurden.

Es ist jedoch auch möglich, mit dem erfindungsgemäßen Verfahren die Einflüsse von Temperaturänderungen auf die Grenzflächenspannung zu ermitteln.

Bei dem in Fig. 3b gezeigten System aus n-Hexan und Wasser wurde ein Winkel von $\theta_1$ = 52,4°, ein Winkel von $\theta_2$ = 51,5° und ein Winkel $\theta_3$ = 49, 6° ermittelt. In diesem Fall ergab sich die Grenzflächenspannung zwischen n-Hexan und Wasser zu 50, 9 mN/m.

Für das in Fig. 3c gezeigte System aus Chloroform und Wasser ergaben sich die Winkel $\theta_1$ = 56, 1°, $\theta_2$ = 47, 5° und $\theta_3$ = 49, 6°. Damit ergab sich eine Grenzflächenspannung von Chloroform und Wasser von 34, 2 mN/m.

Die in den Fig.en 3a - 3c dargestellten Kreise 33 dienen zur genaueren Bestimmung der jeweiligen Winkel $\theta_1$ - $\theta_3$. Die Winkel werden jeweils am Schnittpunkt der Kreise mit der Linie 31, die den Rand des Kanals darstellt, ermittelt.

In den Fig.en 4a bis 4c sind weitere entsprechende Messungen der oben genannten Mischungen dargestellt, wobei hier jedoch eine Aufnahmeeinrichtung mit einem modifizierten Durchgangskanal, d.h. einem Durchgangskanal aus einem geänderten Material bzw. einem Material mit anderer Oberflächenbeschaffenheit verwendet wurde. In diesem Fall ergab sich die Grenzflächenspannung für das Toluen-Wasser-System für 37, 2 mN/m, für n-Hexan-Wasser zu 49, 0 mN/m und für Chloroform und Wasser zu 32, 0 mN/m.

Die mit dem erfindungsgemäßen Verfahren auch unter Verwendung unterschiedlicher Materialien für die Aufnahmeeinrichtung bzw. den Kanal gemessenen Werte lagen mit beiden Aufnahmeeinrichtungen in einem Bereich von 4% sowohl bezüglich der jeweiligen Literaturwerte als auch bezüglich der jeweiligen bekannten experimentellen Werte.

Die einzelnen Experimente wurden hier aus statischen Kontaktwinkeln gewonnen. Gleichermaßen könnten auch dynamische Kontaktwinkel, d.h. sich vergrößernde oder verkleinernde Kontaktwinkel in Betracht gezogen werden.

**Bezugszeichenliste**

| 1 | erste Flüssigkeit |
| 2 | zweite Flüssigkeit |
| 3 | Luft |
| 4 | Luft |
| 5 | Aufnahmeeinrichtung |
| 7 | Grenzfläche zwischen Luft 1 und erster Flüssigkeit 2 |

| | |
|---|---|
| 8 | Grenzfläche zwischen Flüssigkeit 2 und Flüssigkeit 3 |
| 9 | Grenzfläche zwischen Flüssigkeit 3 und Luft 4 |
| 11 | Verbindungsleitung |
| 12 | Spritze |
| 13 | Motoreinrichtung |
| 15 | EDV-Anlage |
| 15a | Monitor |
| 16 | Objektiv |
| 17 | Kameraeinrichtung |
| 18 | Streueinrichtung |
| 20 | Lichtquelle |
| 22 | Verstelleinrichtung |
| 23 | Halteeinrichtung |
| 31 | Linie zur Ermittlung des Kanalrands |
| 33 | Hilfskreislinie zur Ermittlung der Winkel |

**Patentansprüche**

1. Verfahren zur Ermittlung der Grenzflächenspannung zwischen zwei nicht mischbaren Flüssigkeiten mit den Schritten:

- Einführen eines ersten gasförmigen Mediums (3) in eine wenigstens teilweise transparente Aufnahmeeinrichtung (5);
- Einführen der ersten Flüssigkeit (1) in die Aufnahmeeinrichtung (5), wobei eine Grenzfläche zwischen der ersten Flüssigkeit (1) an dem ersten Medium (3) entsteht;
- Einführen der zweiten Flüssigkeit (2) in die Aufnahmeeinrichtung (5), wobei eine Grenzfläche zwischen der zweiten Flüssigkeit (2) an der ersten Flüssigkeit (1) entsteht;
- Einführen eines zweiten gasförmigen Mediums (4) in die Aufnahmeeinrichtung (5), wobei eine Grenzfläche zwischen dem zweiten Medium (4) und der zweiten Flüssigkeit (2) entsteht;
- Beobachtung der in die Aufnahmeeinrichtung (5) eingeführten Medien (3, 4) sowie der Flüssigkeiten (1, 2);
- Ermittlung der Grenzflächenspannung aus den beobachteten Grenzflächen (7, 8, 9) zwischen den Medien und Flüssigkeiten, unter Einbeziehung der Grenzflächenspannungen zwischen den Flüssigkeiten und den angrenzenden Medien,

wobei
die in der Aufnahmeeinrichtung (5) aufgenommenen Medien und Flüssigkeiten bevorzugt mittels einer Kameraeinrichtung (17) beobachtet werden.

2. Verfahren nach Anspruch 1,
**dadurch gekennzeichnet, dass**
die Aufnahmeeinrichtung (5) einen Kanal mit einem vorgegebenen Durchmesser aufweist.

3. Verfahren nach Anspruch 2,
**dadurch gekennzeichnet, dass**
der Kanal einen Durchmesser aufweist, der zwischen $10\mu m$ und $1000\mu m$, bevorzugt zwischen $100\mu m$ und $800\mu m$ und besonders bevorzugt zwischen $400\mu m$ und $600\mu m$ liegt.

4. Verfahren nach wenigstens einem der vorangegangenen Ansprüche,
**dadurch gekennzeichnet, dass**
wenigstens ein Medium (3, 4) und/oder eine Flüssigkeit (1, 2) in die Aufnahmeeinrichtung (5) eingesaugt wird.

5. Verfahren nach wenigstens einem der vorangegangenen Ansprüche,
**dadurch gekennzeichnet, dass**
alle Medien (3, 4) und Flüssigkeiten (1, 2) in die Aufnahmeeinrichtung (5) eingesaugt werden.

6. Verfahren nach wenigstens einem der vorangegangenen Ansprüche,
**dadurch gekennzeichnet, dass**

die Aufnahmeeinrichtung (5) mit einer Spritzeneinrichtung (12) in Verbindung steht.

7. Verfahren nach wenigstens einem der vorangegangenen Ansprüche,
   **dadurch gekennzeichnet, dass**
   die Aufnahmeeinrichtung (5) wenigstens teilweise aus einem Material hergestellt ist, welches aus einer Gruppe von Materialien ausgewählt ist, welche Glas, Borsilikatglas, Quarzglas, Kunststoffe und dergleichen enthält.

8. Verfahren nach wenigstens einem der Ansprüche 2 - 8,
   **dadurch gekennzeichnet, dass**
   die Grenzflächen (7, 8, 9) zwischen den einzelnen Medien (3, 4) und/oder Flüssigkeiten (1,2) sowie die Kontaktflächen mit dem Kanal der Aufnahmeeinrichtung (5) beobachtet werden.

9. Verfahren nach wenigstens einem der vorangegangenen Ansprüche,
   **dadurch gekennzeichnet, dass**
   die Kontaktwinkel an den Grenzflächen (7, 8, 9) zwischen den einzelnen Medien (3, 4) und Flüssigkeiten (1, 2) betrachtet werden.

10. Verfahren nach Anspruch 10,
    **dadurch gekennzeichnet, dass**
    aus den Kontaktwinkeln die Grenzflächenspannung zwischen den Flüssigkeiten (1, 2) ermittelt wird.

11. Verfahren nach einem der Ansprüche 10 - 11,
    **dadurch gekennzeichnet, dass**
    zur Ermittlung der Kontaktwinkel sowie zur Ermittlung der Grenzflächenspannung eine angepasste Software verwendet wird.

12. Vorrichtung zur Ermittlung der Grenzflächenspannung zwischen zwei nicht mischbaren Flüssigkeiten (1, 2) mit einer wenigstens teilweise transparenten Aufnahmeeinrichtung (5), welche einen Kanal zur Aufnahme der zu untersuchenden Flüssigkeiten (1, 2) sowie wenigstens eines weiteren gasförmigen Mediums (3, 4) aufweist, und einer Kameraeinrichtung (17) zur Beobachtung der zwischen den einzelnen Flüssigkeiten (1, 2) und Medien (3, 4) entstehenden Grenzflächen (7, 8, 9), und mit einer EDV-Anlage (15), die angeordnet ist, um die Grenzflächenspannung aus den gemäss A1 erzeugten Grenzflächen (7, 8, 9) zu ermitteln.

13. Software zur Durchführung eines Verfahrens nach wenigstens einem der vorangegangenen Ansprüche 1-11, wobei die Software aus von einer Beobachtungseinrichtung gelieferten Bildern die Kontaktwinkel berechnet.

**Claims**

1. Method for determining the interfacial tension between two immiscible liquids, comprising the steps:

   - introducing a first gaseous medium (3) into an at least partially transparent holding device (5);
   - introducing the first liquid (1) into the holding device (5), wherein an interface forms between the first liquid (1) and the first medium (3);
   - introducing the second liquid (2) into the holding device (5), wherein an interface forms between the second liquid (2) and the first liquid (1);
   - introducing a second gaseous medium (4) into the holding device (5), wherein an interface forms between the second medium (4) and the second liquid (2);
   - observing the media (3, 4) and also the liquids (1, 2) introduced into the holding device (5);
   - determining the interfacial tension from the observed interfaces (7, 8, 9) between the media and liquids, including the interfacial tensions between the liquids and the adjoining media;

   wherein
   the media and liquids held in the holding device (5) are preferably observed by means of a camera device (17).

2. Method according to claim 1, **characterised in that** the holding device (5) comprises a channel having a predefined diameter.

3. Method according to claim 2, **characterised in that** the channel has a diameter of between 10 μm and 1000 μm, preferably between 100 μm and 800 μm and particularly preferably between 400 μm and 600 μm.

4. Method according to at least one of the preceding claims, **characterised in that** at least one medium (3, 4) and/or one liquid (1, 2) is sucked into the holding device (5).

5. Method according to at least one of the preceding claims, **characterised in that** all the media (3, 4) and liquids (1, 2) are sucked into the holding device (5).

6. Method according to at least one of the preceding claims, **characterised in that** the holding device (5) is connected to a syringe device (12).

7. Method according to at least one of the preceding claims, **characterised in that** the holding device (5) is at least partially made from a material selected from a group of materials comprising glass, borosilicate glass, quartz glass, plastics and the like.

8. Method according to at least one of claims 2 to 8, **characterised in that** the interfaces (7, 8, 9) between the individual media (3, 4) and/or liquids (1, 2) and also the areas of contact with the channel of the holding device (5) are observed.

9. Method according to at least one of the preceding claims, **characterised in that** the contact angles at the interfaces (7, 8, 9) between the individual media (3, 4) and liquids (1, 2) are observed.

10. Method according to claim 10, **characterised in that** the interfacial tension between the liquids (1, 2) is determined from the contact angles.

11. Method according to one of claims 10 to 11, **characterised in that** suitable software is used to determine the contact angles and also to determine the interfacial tension.

12. Apparatus for determining the interfacial tension between two immiscible liquids (1, 2), comprising an at least partially transparent holding device (5) which comprises a channel for holding the liquids (1, 2) to be analysed and also at least one further gaseous medium (3, 4), and a camera device (17) for observing the interfaces (7, 8, 9) formed between the individual liquids (1, 2) and media (3, 4), and comprising a computer system (15) which is designed to determine the interfacial tension from the interfaces (7, 8, 9) formed according to claim 1.

13. Software for carrying out a method according to at least one of the preceding claims 1 to 11, wherein the software calculates the contact angles from images supplied by an observation device.

**Revendications**

1. Procédé pour la détermination de la tension interfaciale entre deux liquides non miscibles, comportant les étapes suivantes :

   - introduction d'un premier milieu gazeux (3) dans un dispositif récepteur (5) au moins partiellement transparent ;
   - introduction du premier liquide (1) dans le dispositif récepteur (5), une interface entre le premier liquide (1) et le premier milieu (3) en résultant ;
   - introduction du second liquide (2) dans le dispositif récepteur (5), une interface entre le second liquide (2) et le premier liquide (1) en résultant ;
   - introduction d'un second milieu gazeux (4) dans le dispositif récepteur (5), une interface entre le second milieu (4) et le second liquide (2) en résultant ;
   - observation des milieux (3, 4) ainsi que des liquides (1, 2) introduits dans le dispositif récepteur (5) ;
   - détermination de la tension interfaciale à partir des interfaces observées (7, 8, 9) entre les milieux et les liquides, y compris des tensions interfaciales entre les liquides et les milieux adjacents,

   les milieux et les liquides reçus dans le dispositif récepteur (5) étant observés au moyen d'un dispositif à caméra (17).

2. Procédé selon la revendication 1, **caractérisé en ce que** le dispositif récepteur (5) comporte un canal ayant un diamètre préétabli.

**3.** Procédé selon la revendication 2, **caractérisé en ce que** le canal a un diamètre qui est compris entre 10 μm et 1 000 μm, de préférence entre 100 μm et 800 μm et de façon particulièrement préférée entre 400 μm et 600 μm.

**4.** Procédé selon au moins l'une des revendications précédentes, **caractérisé en ce qu'**au moins un milieu (3, 4) et/ou un liquide (1, 2) est aspiré dans le dispositif récepteur (5).

**5.** Procédé selon au moins l'une des revendications précédentes, **caractérisé en ce que** tous les milieux (3, 4) et tous les liquides (1, 2) sont aspirés dans le dispositif récepteur (5).

**6.** Procédé selon au moins l'une des revendications précédentes, **caractérisé en ce que** le dispositif récepteur (5) est relié à un dispositif injecteur (12).

**7.** Procédé selon au moins l'une des revendications précédentes, **caractérisé en ce que** le dispositif récepteur (5) est fabriqué au moins en partie en un matériau qui est choisi dans un groupe de matériaux qui comporte le verre, le verre de borosilicate, le verre de quartz, des matières plastiques et similaires.

**8.** Procédé selon au moins l'une des revendications 2 à 8, **caractérisé en ce qu'**on observe les interfaces (7, 8, 9) entre les milieux individuels (3, 4) et/ou les liquides individuels (1, 2) ainsi que les surfaces de contact avec le canal du dispositif récepteur (5).

**9.** Procédé selon au moins l'une des revendications précédentes, **caractérisé en ce qu'**on observe les angles de contact au niveau des interfaces (7, 8, 9) entre les milieux individuels (3, 4) et les liquides (1, 2).

**10.** Procédé selon la revendication 10, **caractérisé en ce qu'**on détermine à partir des angles de contact la tension interfaciale entre les liquides (1, 2).

**11.** Procédé selon la revendication 10 ou 11, **caractérisé en ce qu'**on utilise un programme adapté à la détermination des angles de contact ainsi qu'à la détermination de la tension interfaciale.

**12.** Appareil pour la détermination de la tension interfaciale entre deux liquides non miscibles (1, 2), comportant un dispositif récepteur (5) au moins partiellement transparent, qui comporte un canal pour la réception des liquides (1, 2) à étudier ainsi qu'au moins un autre milieu gazeux (3,4) et un dispositif à caméra (17) pour l'observation des interfaces (7, 8, 9) formées entre les liquides individuels (1, 2) et les milieux individuels (3, 4) et comportant un équipement informatique (15) qui est disposé pour déterminer la tension interfaciale à partir des interfaces (7, 8, 9) engendrées selon la revendication 1.

**13.** Programme pour la mise en oeuvre d'un procédé selon au moins l'une des revendications précédentes 1-11, le programme calculant les angles de contact à partir d'images fournies par un dispositif d'observation.

Fig. 1

Fig. 2

Fig. 3a

$\theta_2=53,3°$    $\theta_3=49,1°$    $\theta_1=55,6°$    33

$\theta_2=52,8°$    $\theta_3=49,4°$    31    $\theta_1=56,2°$

Fig. 3b

$\theta_2$    $\theta_3$    $\theta_1$

$\theta_2$    $\theta_3$    $\theta_1$

Fig. 3c

$\theta_2$    $\theta_3$    $\theta_1$

$\theta_2$    $\theta_3$    $\theta_1$

Fig. 4a

Fig. 4b

$\theta_2 = 56,1°$

$\theta_3 = 59,6°$

$\theta_1 = 62,0°$

Fig. 4c

$\theta_2 = 56,3°$

$\theta_3 = 57,1°$

$\theta_1 = 60,3°$